# EUROPÄISCHE PATENTSCHRIFT

(11) **EP 2 406 674 B1**
(45) Veröffentlichungstag und Bekanntmachung des Hinweises auf die Patenterteilung: **22.02.2017**
(21) Anmeldenummer: 10714168.1
(22) Anmeldetag: 12.03.2010
(51) Int. Cl.: G02B 6/14, G02B 6/02, H01S 3/067

(54) **EINZELMODENPROPAGATION IN MIKROSTRUKTURIERTEN OPTISCHEN FASERN**
SINGLE-MODE PROPAGATION IN MICROSTRUCTURED OPTICAL FIBERS
PROPAGATION DE MODES INDIVIDUELS DANS DES FIBRES OPTIQUES À MICROSTRUCTURE

(30) Priorität: 13.03.2009 DE 102009012662; 29.12.2009 DE 102009060711
(43) Veröffentlichungstag der Anmeldung: 18.01.2012
(73) Patentinhaber: Fraunhofer-Gesellschaft zur Förderung der angewandten Forschung e.V., 80686 München (DE); Friedrich-Schiller-Universität Jena, 07745 Jena (DE)
(72) Erfinder: LIMPERT, Jens, 07751 Jena (DE); RÖSER, Fabian, D-01097 Dresden (DE); EIDAM, Tino, 07751 Jena (DE); JÁUREGUI MISAS, César, 07743 Jena (DE); TÜNNERMANN, Andreas, 99425 Weimar (DE)
(74) Vertreter: Isfort, Olaf
(86) Internationale Anmeldenummer: PCT/EP2010/001586
(87) Internationale Veröffentlichungsnummer: WO 2010/102833

(56) Entgegenhaltungen:
- EP-A1- 1 845 397
- US-A1- 2004 175 084
- US-A1- 2005 157 998
- US-A1- 2006 165 361
- US-A1- 2009 034 059
- IMAMURA K ET AL: "Design optimization of holey fibers to realize zero dispersion in 500 nm band and suppressed higher-order modes propagation" WINTER TOPICAL MEETING SERIES, 2008 IEEE/LEOS, IEEE, PI, 1. Januar 2008 (2008-01-01), Seiten 160-161, XP031211353 ISBN: 978-1-4244-1594-6
- EGOROVA O N ET AL: "All-solid photonic bandgap fiber with large mode area and high order modes suppression" 4. Mai 2008 (2008-05-04), LASERS AND ELECTRO-OPTICS, 2008. CLEO 2008. CONFERENCE ON, IEEE, PISCATAWAY, NJ, USA, PAGE(S) 1 - 2 , XP031277643 ISBN: 978-1-55752-859-9 * Zusammenfassung; Abbildung 1
- ARISMAR CERQUEIRA S ET AL: "PCFDT: An accurate and friendly photonic crystal fiber design tool" OPTIK, WISSENSCHAFTLICHE VERLAG GMBH, DE LNKD- DOI:10.1016/J.IJLEO.2007.04.016, Bd. 119, Nr. 15, 1. November 2008 (2008-11-01), Seiten 723-732, XP025585054 ISSN: 0030-4026 [gefunden am 2008-10-23]
- CANNING J: "Photonic crystal fibres and gratings: enabling a novel approach to lasers, sensors and other applications" LEOS, 2005 IEEE ANNUAL MEETING CONFERENCE PROCEEDINGS SYDNEY, AUSTRALIA 23-27 OCT. 2005, PISCATAWAY, NJ, USA,IEEE, PISCATAWAY, NJ, USA LNKD- DOI:10.1109/LEOS.2005.1548281, 23. Oktober 2005 (2005-10-23), Seiten 862-863, XP010886832 ISBN: 978-0-7803-9217-5

## Beschreibung

Die Erfindung betrifft eine optische Faser als Lichtwellenleiter für den Einzelmodenbetrieb.

Optische Fasern werden, z.B. als optisch gepumpte Verstärkerfasern, in faserbasierten Lasersystemen eingesetzt. Faserlaser erfüllen vielfältige Aufgaben, z.B. in der hochpräzisen Materialbearbeitung oder auch in der Messtechnik. Ihre Vorteile sind eine hohe Leistungsdichte sowie eine hohe Strahlqualität sowohl im gepulsten als auch im cw-Betrieb. Eine besondere Bedeutung kommt auch der Beugungsbegrenzung bei Faserlasern zu. Diese ist z.B. bei der Materialbearbeitung von Vorteil, wo es auf Präzision ankommt.

Limitierende Faktoren bei der Entwicklung von Faserlasern sind nichtlineare Effekte, wie z.B. Raman-Streuung und Selbstphasenmodulation. Diese sind proportional zur Leistungsdichte in der Faser und der zurückgelegten Faserstrecke. Die Reduzierung der nichtlinearen Effekte kann durch Vergrößerung des lichtführenden Faserbereiches, d.h. des Durchmessers des Faserkerns erreicht werden. Das Design entsprechender Großkernfasern zielt darauf ab, dass bevorzugt die fundamentale Mode in der Faser propagiert (sog. Single-Mode Betrieb).

Aus dem Stand der Technik sind verschiedene Varianten von Großkernfasern, die im Single-Mode Betrieb arbeiten, bekannt.

Z.B. die DE 198 28 154 A1 beschreibt die Anwendung einer konventionellen Large-Mode-Area (LMA) Faser, in welcher sich bei vergrößertem Durchmesser nur eine geringe Anzahl von Moden ausbreitet. Zur Unterdrückung höherer Transversalmoden wird die Faser gezielt gebogen und gleichzeitig oder alternativ eine Modenselektion durch optimierte Anregung durchgeführt.

Die US 2006/0176911 A1 beschreibt eine Faser im sog. "rod-type"-Design. Hier besteht die Faser aus einem zentralen Kern und einem diesen umgebenden Mantel, welcher das Pumplicht führt. Der Mantel weist eine photonische Struktur aus voneinander beabstandeten, regelmäßig angeordneten Kapillaren auf, welche parallel zum Kern verlaufen. Außerhalb des Mantels ist eine weitere Hülle mit einem niedrigeren Brechungsindex angeordnet. Insgesamt beträgt der Durchmesser der Faser zwischen 1 mm und 10 mm. Die Faserlänge beträgt weniger als 1 m.

Des Weiteren sind Lösungen bekannt, bei welchen ein zentraler Faserkern von mindestens einem helikalen Kern umwunden ist (z.B. US 7,424,193 B2). Hier propagiert die fundamentale Mode im zentralen Kern, während die Moden höherer Ordnung in den helikalen Kern koppeln und dort propagieren bzw. durch Verluste gedämpft werden.

US 7,280,730 B2 beschreibt Hohlfasern mit einer hexagonalen Lochstruktur im Cladding. Die Struktur ist so angelegt, dass das Verhältnis von Lochdurchmesser zu Lochabstand größer ist als 0,35. Im Zentrum der hexagonalen Struktur entsteht ein frei bleibender Kern, der groß genug ist, um nichtlineare Effekte auf ein vertretbares Maß zu reduzieren.

In DE 10 2006 023 976 A1 bzw. US 2006/0263024 A1 wird das Ziel verfolgt, Fasern mit großen Kernen zu erhalten, die eine Einzelmodenpropagation gewährleisten. Die Fasern weisen Lochstrukturen im Mantel auf, wobei das Prinzip ist, möglichst große Löcher im Mantel möglichst nah beieinander anzuordnen.

Das Dokument von Imamura K. et al. ("Design optimization of holey fibers to realize zero dispersion in 500nm band and suppressed higher-order modes propagation", 2008, IEEE/ LEOS, PI, 1. January 2008, pages 160-161, XP031211353) zeigt eine Vollkernfaser wobei Moden höherer Ordnung unterdrückt werden.

Das Dokument von EGOROVA O.N. et al. ("All-solid photonic bandgap fiber with large mode area and high order modes suppression", 4. May 2008, Lasers and Electro-optics, CLEO 2008, pages 1-2, XP031277643) zeigt eine Großkernfaser wobei Moden höherer Ordnung unterdrückt werden.

Es ist Aufgabe der Erfindung, eine verbesserte optische Faser zu schaffen, welche im Einzelmodenbetrieb arbeitet und wenig anfällig für nichtlineare Effekte ist.

Zur Lösung dieser Aufgabe schlägt die Erfindung vor, dass die Faser eine Strukturierung aufweist, durch welche die Propagation von Moden höherer Ordnung in dem Lichtwellenleiter unterdrückt wird.

Die Erfindung basiert auf dem Ansatz, durch gezielte Strukturierung (z.B. der Mantelbereiche der Faser) zu erreichen, dass die Propagation transversaler Moden höherer Ordnung stärker gedämpft wird als die Propagation der fundamentalen Mode des Lichtwellenleiters. Generell besitzen höhere Transversalmoden (HOM) in optischen Multimode-Fasern unterschiedliche, d.h. zumeist höhere Propagationsverluste als die fundamentale Mode (FM). Allerdings sind die Absolutwerte der Dämpfung so gering, dass letztlich alle Moden nahezu verlustfrei über große Strecken innerhalb der Faser propagieren können. Durch die erfindungsgemäße Mikrostrukturierung wird der Unterschied der Propagationsverluste der FM gegenüber den Verlusten der HOM in einen Bereich verschoben, in welchem die Dämpfung der FM akzeptabel ist bzw. durch Verstärkung kompensiert werden kann, jedoch gleichzeitig die Dämpfung der HOM so groß ist, dass deren Propagation entscheidend gehemmt ist. Die erfindungsgemäße Strukturierung sollte zweckmäßigerweise so ausgebidet sein, dass die Propagationsverluste für die FM über die Faserlänge weniger als 3 dB und für die HOM, insbesondere für die erste Mode oberhalb der FM, mehr als 20 dB betragen.

Erfindungsgemäß kann die Strukturierung Bereiche umfassen, in denen der Brechungsindex von dem Brechungsindex der übrigen Bereiche abweicht. Die Geometrie der Strukturierung in Kombination mit geeigneten Brechungsindizes ermöglicht eine gezielte Anregung ausbreitungsfähiger Moden. Die Einbringung von Strukturen mit möglichst geringem Brechungsindex kann vorteilhaft sein. Entsprechend kann die Strukturierung der Faser Hohlstrukturen (Löcher) umfassen.

Eine besonders vorteilhafte Ausgestaltung sieht vor, dass die Strukturierung, im Querschnitt der Faser gesehen, einen koaxial zur Faser angeordneten (z.B. aus axialen Löchern gebildeten) Luftring umfasst. Hierbei kann zusätzlich vorgesehen sein, dass der Luftring in Umfangsrichtung Unterbrechungen aufweist. Die Symmetrie bzw. die Geometrie dieser Unterbrechungen wird dabei so ausgelegt, dass die Verluste der HOM im Verhältnis zu den Verlusten der FM an die gewünschte Faserlänge optimal angepasst sind. Zur weiteren Optimierung der Eigenschaften der erfindungsgemäßen Faser können, wiederum im Querschnitt der Faser gesehen, sich im Wesentlichen radial von dem Luftring aus erstreckende längliche oder linienartige Strukturen vorgesehen sein, die ebenfalls jeweils aus mehreren axialen Löchern gebildet sein können. Bevorzugt erstrecken sich diese Radialstrukturen von den Randbereichen der Unterbrechungen ausgehend nach außen (von der Mittelachse der Faser aus gesehen).

Die Erfindung sieht vor, dass die Strukturierung entlang der Längserstreckung der Faser verlaufende Kanäle umfasst. Hierdurch kann über die gesamte Länge der Faser eine konstante Modenselektion erreicht werden. Die Strukturierung kann sich dabei jedoch auch über die Faserlänge hinweg verändern. Zum Beispiel können sich die Kanäle schließen und wieder öffnen.

Erfindungsgemäß ist der Durchmesser der Kanäle nicht größer als das Zwanzigfache, vorzugsweise nicht größer als das Zehnfache der Wellenlänge der in dem Lichtwellenleiter geführten Strahlung. Der Durchmesser der Kanäle ist im Hinblick auf den Gesamtdurchmesser der Faser möglichst gering zu halten, während die Kanäle gleichzeitig einen Mindestdurchmesser aufweisen müssen, damit das in der Faser geführte Licht mit der erfindungsgemäßen Struktur in Wechselwirkung treten kann.

Eine vorteilhafte Ausbildung der optischen Faser sieht vor, dass das Verhältnis von Kanaldurchmesser zum Abstand der Mittelachsen zweier Kanäle kleiner ist als 0,5, wobei der Abstand der Mittelachsen zweier Kanäle größer ist als das Zwanzigfache der Wellenlänge der in dem Lichtwellenleiter geführten Strahlung. In der Praxis haben sich diese Parameter als besonders vorteilhaft herausgestellt, um die HOM möglichst effektiv herauszufiltern. Das Verhältnis von Kanaldurchmesser zum Abstand der Mittelachsen zweier Kanäle mit einem Wert kleiner als 0,5 sorgt dabei für relativ dünne Kanäle mit einem relativ großen Abstand zwischen den einzelnen Kanälen. Dabei wird der Faserkern der optischen Faser durch einen Bereich der Faser gebildet, in dem keine Kanäle verlaufen. Dieser Bereich kann einen vergleichsweise großen Querschnitt mit einem Durchmesser im Bereich größer 20 µm aufweisen. Nichtlineare Effekte werden somit effektiv unterdrückt bzw. vermieden. Gleichzeitig ermöglicht die erfindungsgemäße Strukturierung einen Single-Mode Betrieb.

Eine alternative Ausgestaltung sieht vor, dass das Verhältnis von Kanaldurchmesser zum Abstand der Mittelachsen zweier Kanäle kleiner ist als 0,35, wobei wiederum der Abstand der Mittelachsen zweier Kanäle größer ist als das Zwanzigfache der Wellenlänge der in dem Lichtwellenleiter geführten Strahlung. Dabei wird der Faserkern, in dem die FM propagiert, durch mindestens einen fehlenden Kanal gebildet. Auch bei diesem Design ist ein Single-Mode Betrieb mit geringer Anfälligkeit für nichtlineare Effekte bei hoher Lichtintensität möglich.

Die Kanäle innerhalb der optischen Faser können, im Querschnitt der Faser gesehen, hexagonal angeordnet sein. Die geometrische Anordnung ermöglicht eine gezielte Feinabstimmung der Modenselektion innerhalb der Faser.

Bei einer bevorzugten Ausgestaltung der erfindungsgemäßen optischen Faser bilden die Kanäle, im Querschnitt der Faser gesehen, Gruppen aus mindestens zwei Kanälen, in der Weise, dass die Abstände der Mittelachsen der Kanäle innerhalb einer Gruppe kleiner sind als die Abstände der Mittelachsen der Kanäle verschiedener Gruppen, wobei der Abstand der Schwerpunktsachsen der Gruppen größer als das Zwanzigfache der Wellenlänge der in dem Lichtwellenleiter geführten Strahlung ist. Die Schwerpunktsachse ist dabei diejenige Achse, die durch den geometrischen Schwerpunkt der Kanalquerschnitte der jeweiligen Gruppe verläuft. Bei dieser Ausgestaltung werden die HOM effektiv herausgefiltert. Dabei ergeben sich relativ dünne, gruppiert angeordnete Kanäle mit einem relativ großen Abstand zwischen den Gruppen der Kanäle. Gleichzeitig kann ein Kernbereich mit vergleichsweise großem Querschnitt (größer 20 µm) erhalten werden. Die Gruppen der Kanäle können wiederum hexagonal um den Kernbereich herum angeordnet sein.

Erfindungsgemäß ist das Material der Faser zumindest in Teilbereichen mit Ionen der seltenen Erden dotiert. Dies ermöglicht den Einsatz der optischen Faser als aktive Faser, z.B. in einem Laser. Durch die Dotierung ergibt sich in der Regel eine lokale Indexerhöhung in der Faser. Typischerweise wird diese Indexerhöhung durch eine zusätzliche Kodotierung kompensiert, so dass sich effektiv eine Indexabsenkung ergibt. Die Indexabsenkung sollte dabei kleiner als 3x10⁻⁴, kleiner als 2x10⁻⁴, kleiner als 1 x10⁻⁴ oder sogar kleiner als 5x10⁻⁵ sein. Eine so dotierte Faser kann als Verstärkerfaser genutzt werden. Eine selektive lokale Dotierung im Zentrum der Faser kann genutzt werden, um gezielt eine bevorzugte Verstärkung der FM zu bewirken.

In einer vorteilhaften Ausgestaltung kann die Faser von einer weiteren lichtleitenden Struktur umschlossen sein. Durch die Umhüllung mit einer zweiten Wellenleiterstruktur lässt sich ein Doppelkernkonzept realisieren. Die äußere (vorzugsweise undotierte) lichtleitende Struktur kann z.B. das Pumplicht in einem Faserlaser führen.

Ergänzend kann die optische Faser, je nach den Erfordernissen der Anwendungsumgebung, biegesteif oder starr ausgebildet sein. Hierfür sollte der Gesamtdurchmesser der Faser wenigstens 0,5 mm, vorzugsweise wenigstens 1 mm betragen. Bei diesem "rod-type"-Design werden Biegeverluste vermieden.

Vorteilhaft ist es ebenfalls, wenn der Faserkern in zumindest einer Richtung quer zur Längsachse der Faser (z.B. in radialer Richtung) einen Brechungsindex-Gradienten aufweist. Dabei kann der Brechungsindex-Gradient stetig veränderlich sein. Eine Brechungsindexneigung im Kernbereich kann durch ein stetig veränderliches Brechzahlprofil der Faser erreicht werden. Insbesondere ist dies vorteilhaft, um eine Vorkompensation von Biegeverlusten zu gewährleisten. Somit ist es möglich, gebogene Fasern mit großem Modenfelddurchmesser zu schaffen, ohne eine Modenverzerrung bzw. Modenkompression hinnehmen zu müssen.

Schließlich sieht die Erfindung die Möglichkeit vor, die optische Faser polarisierend oder polarisationserhaltend auszugestalten. Durch eine gezielte Anordnung der Kanäle, z.B. nur in einer Längsebene der Faser, ist es möglich, die Ausbildung eines bestimmten Polarisationszustandes herbeizuführen. Ebenso kann eine Spannungsdoppelbrechung vorgesehen sein, um die Entartung der Polarisationseigenzustände der FM aufzuheben.

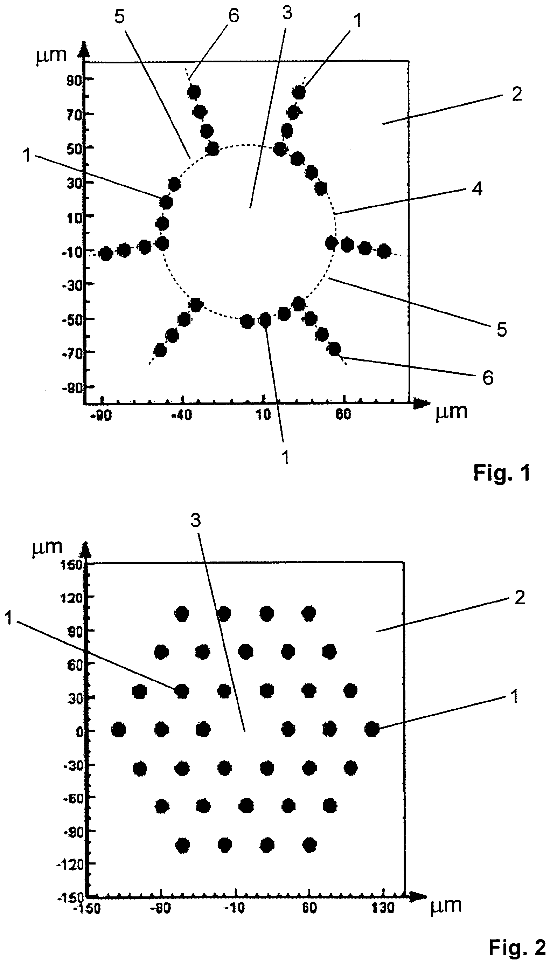

Ausführungsbeispiele der Erfindung werden im Folgenden anhand der Zeichnungen näher erläutert. Die Figuren 1 bis 3 zeigen schematisch Querschnitte durch gemäß der Erfindung ausgestaltete optische Fasern.

Dargestellt sind Querschnitte von optischen Fasern, die gemäß der Erfindung als Lichtwellenleiter für den Einzelmodenbetrieb ausgelegt sind. Zur Verdeutlichung der Dimensionierung enthalten die Figuren Koordinatenachsen mit Längenangaben in µm.

In ihren lichtführenden Bereichen weist die Faser eine Strukturierung auf, durch welche selektiv die Propagation von Moden höherer Ordnung in dem Lichtwellenleiter unterdrückt wird. Durch die Strukturierung soll die Propagation transversaler Moden höherer Ordnung (HOM) stärker gedämpft werden als die Propagation der fundamentalen Mode (FM) des Lichtwellenleiters.

Bei sämtlichen Ausführungsbeispielen hat das Fasermaterial 2 einen Brechungsindex von 1,45. Die Strukturierung wird durch Bereiche gebildet, in denen der Brechungsindex von dem Brechungsindex der übrigen Bereiche abweicht. Hierzu sind parallel zur Längserstreckung der Faser verlaufende Luftkanäle 1 (Brechungsindex = 1,0) vorgesehen.

In Figur 1 sind die Luftkanäle 1 so in das Fasermaterial 2 eingebettet, dass sich in der Mitte der Struktur ein relativ großer Faserkern 3 mit einem Durchmesser von ca. 100 µm ausbildet. Die Luftkanäle 1 bilden dabei einen im Querschnitt im Wesentlichen kreisförmigen Luftring 4 (in Figur 1 gestrichelt angedeutet), welcher in Umfangsrichtung Unterbrechungen 5 aufweist, die aus dem Fasermaterial 2 bestehen. Der Durchmesser der Luftkanäle 1 ist nicht größer als das Zehnfache der Wellenlänge der geführten Strahlung. Weiterhin sind sich im Wesentlichen radial von dem Luftring 4 aus erstreckende längliche oder linienartige Strukturen 6 vorgesehen, die ebenfalls jeweils aus mehreren axialen Luftkanälen 1 gebildet sind. Diese Radialstrukturen erstrecken sich von den Randbereichen der Unterbrechungen 5 ausgehend nach außen. Die dargestellte Geometrie der Anordnung der Luftkanäle 1 ist so gewählt, dass die Verluste der HOM im Verhältnis zu den Verlusten der FM maximiert sind. Durch die jeweils gewählte Geometrie kann dieses Verhältnis an die gewünschte Faserlänge angepasst werden.

In Figur 2 ist eine hexagonale Anordnung der Luftkanäle 1 innerhalb des Fasermaterials 2 dargestellt. Der Faserkern 3 wird durch einen Bereich der Faser gebildet, in dem keine Luftkanäle 1 verlaufen. Bei dem dargestellten Ausführungsbeispiel ist das Verhältnis von Kanaldurchmesser zum Abstand der Mittelachsen zweier Kanäle kleiner als 0,35. Gleichzeitig beträgt der Abstand der Mittelachsen zweier Kanäle mehr als 20 µm. Diese Parameter gewährleisten eine effektive Unterdrückung der HOM. Der Bereich des Faserkerns 3 hat einen großen Querschnitt mit einem Durchmesser von etwa 65 µm. In diesem wird das Licht effektiv in der FM geführt.

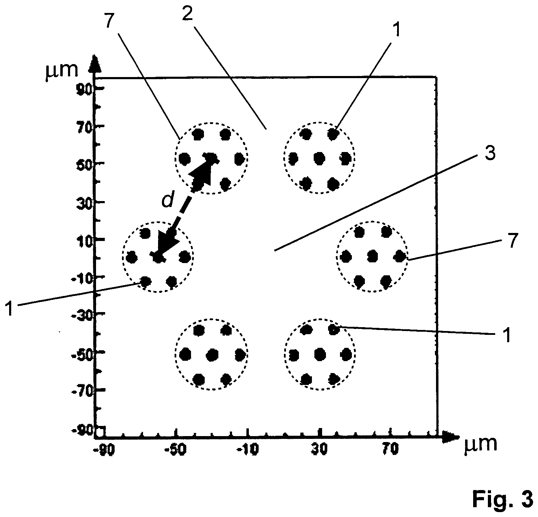

In Figur 3 sind mehrere hexagonale Teilstrukturen in Form von Gruppen 7 (durch gestrichelte Kreise angedeutet) aus jeweils sieben hexagonal angeordneten Luftkanälen 1 gebildet. Das von den Gruppen 7 wiederum in hexagonaler Geometrie umgebende Zentrum des Faserquerschnitts bildet den Faserkern 3. Der Durchmesser der Luftkanäle 1 ist auch bei diesem Ausführungsbeispiel nicht größer als das Zehnfache der Wellenlänge der geführten Strahlung. Der Abstand d der Schwerpunktsachsen der Gruppen 7 ist größer als das Zwanzigfache der Wellenlänge der in dem Lichtwellenleiter geführten Strahlung. Wie in der Figur 3 zu sehen ist, ergeben sich relativ dünne, gruppiert angeordnete Luftkanäle 1 mit einem relativ großen Abstand zwischen den Gruppen 7 der Luftkanäle 1, so dass ein entsprechend großer Faserkern 3 resultiert.

## Patentansprüche

1. Optische Faser als Lichtwellenleiter für den Einzelmodenbetrieb, wobei die Faser eine Strukturierung aufweist, durch welche selektiv die Propagation von Moden höherer Ordnung in dem Lichtwellenleiter unterdrückt wird, wobei die Strukturierung entlang der Längserstreckung der Faser verlaufende Kanäle (1) umfasst, wobei ein Faserkern (3) durch einen Bereich der Faser gebildet wird, in dem keine Kanäle (1) verlaufen, **dadurch gekennzeichnet, dass**
- die Strukturierung einen koaxial zur Faser angeordneten Luftring (4) umfasst, der in Umfangsrichtung Unterbrechungen (5) aufweist, wobei sich Radialstrukturen (6) von den Randbereichen der Unterbrechungen (5) ausgehend nach außen erstrecken, oder
- die Kanäle (1), im Querschnitt der Faser gesehen, Gruppen (7) aus mindestens zwei Kanälen (1) bilden, in der Weise, dass die Abstände der Mittelachsen der Kanäle (1) innerhalb einer Gruppe (7) kleiner sind als die Abstände der Mittelachsen der Kanäle (1) verschiedener Gruppen (7), wobei der Abstand (d) der Schwerpunktsachsen der Gruppen (7) größer als das Zwanzigfache der Wellenlänge der in dem Lichtwellenleiter geführten Strahlung ist.

2. Optische Faser nach Anspruch 1, **dadurch gekennzeichnet, dass** die Strukturierung Bereiche umfasst, in denen der Brechungsindex von dem Brechungsindex der übrigen Bereiche abweicht.

3. Optische Faser nach Anspruch 1 oder 2, **dadurch gekennzeichnet, dass** der Durchmesser der Kanäle (1) nicht größer ist als das Zwanzigfache, vorzugsweise nicht größer als das Zehnfache der Wellenlänge der in dem Lichtwellenleiter geführten Strahlung.

4. Optische Faser nach einem der Ansprüche 1 bis 3, **dadurch gekennzeichnet, dass** das Verhältnis von Kanaldurchmesser zum Abstand der Mittelachsen zweier Kanäle (1) kleiner ist als 0,5, wobei der Abstand der Mittelachsen zweier Kanäle (1) größer ist als das Zwanzigfache der Wellenlänge der in dem Lichtwellenleiter geführten Strahlung.

5. Optische Faser nach einem der Ansprüche 1 bis 3, **dadurch gekennzeichnet, dass** das Verhältnis von Kanaldurchmesser zum Abstand der Mittelachsen zweier Kanäle (1) kleiner ist als 0,35, wobei der Abstand der Mittelachsen zweier Kanäle (1) größer ist als das Zwanzigfache der Wellenlänge der in dem Lichtwellenleiter geführten Strahlung.

6. Optische Faser nach einem der Ansprüche 1 bis 5, **dadurch gekennzeichnet, dass** die Kanäle (1), im Querschnitt der Faser gesehen, hexagonal angeordnet sind.

7. Optische Faser nach einem der Ansprüche 1 bis 6, **dadurch gekennzeichnet, dass** das Material der Faser, zumindest in Teilbereichen, mit Ionen der seltenen Erden dotiert ist.

## Claims

1. Optical fibre as optical waveguide for single-mode operation, wherein the fibre has structuring by means of which the propagation of higher-order modes in the optical waveguide is selectively suppressed, wherein the structuring comprises channels (1) extending along the longitudinal extent of the fibre, wherein a fibre core (3) is formed by a region of the fibre in which no channels (1) extend,
**characterized**
**in that**
- the structuring comprises an air ring (4) arranged coaxially with the fibre, said air ring having interruptions (5) in the circumferential direction, wherein radial structures (6) extend outwardly proceeding from the edge regions of the interruptions (5), or
- the channels (1), as seen in the cross section of the fibre, form groups (7) of at least two channels (1) in such a way that the distances between the central axes of the channels (1) within one group (7) are smaller than the distances between the central axes of the channels (1) of different groups (7), wherein the distance (*d*) between the centroid axes of the groups (7) is greater than twenty times the wavelength of the radiation guided in the optical waveguide.

2. Optical fibre according to Claim 1, **characterized in that** the structuring comprises regions in which the refractive index deviates from the refractive index of the remaining regions.

3. Optical fibre according to Claim 1 or 2, **characterized in that** the diameter of the channels (1) is not greater than twenty times, preferably not greater than ten times, the wavelength of the radiation guided in the optical waveguide.

4. Optical fibre according to one of Claims 1 to 3, **characterized in that** the ratio of channel diameter to the distance between the central axes of two channels (1) is less than 0.5, wherein the distance between the central axes of two channels (1) is greater than twenty times the wavelength of the radiation guided in the optical waveguide.

5. Optical fibre according to one of Claims 1 to 3, **characterized in that** the ratio of channel diameter to the distance between the central axes of two channels (1) is less than 0.35, wherein the distance between the central axes of two channels (1) is greater than twenty times the wavelength of the radiation guided in the optical waveguide.

6. Optical fibre according to one of Claims 1 to 5, **characterized in that** the channels (1), as seen in the cross section of the fibre, have a hexagonal arrangement.

7. Optical fibre according to one of Claims 1 to 6, **characterized in that** the material of the fibre, at least in portions, is doped with rare earth ions.

## Revendications

1. Fibre optique en tant que guide d'ondes optiques pour le fonctionnement en mode individuel, la fibre présentant une structuration par laquelle, sélectivement la propagation de modes d'ordres supérieurs est étouffée dans le guide d'ondes optiques, la structure comprenant des canaux (1) s'écoulant le long de l'extension longitudinale de la fibre, un noyau de la fibre (3) étant formé par une zone de la fibre, dans laquelle ne s'écoule aucun canal (1),
**caractérisée en ce que**
- la structuration comprend un anneau d'air (4) placé de manière coaxiale par rapport à la fibre, qui dans la direction périphérique comporte des interruptions (5), des structures radiales (6) s'étendant vers l'extérieur, en partant des zones marginales des interruptions (5) ou
- vus dans la section transversale de la fibre, les canaux (1) forment des groupes (7) d'au moins deux canaux (1), de la sorte que les écarts des axes médians des canaux (1) à l'intérieur d'un groupe (7) soient inférieurs aux écarts des axes médians des canaux (1) de différents groupes (7), l'écart (d) des axes du centre de gravité des groupes (7) étant supérieur au vingtuple de la longueur d'onde du rayonnement guidé dans le guide d'ondes optiques.

2. Fibre optique selon la revendication 1, **caractérisée en ce que** la structuration comprend des zones dans lesquelles l'indice de réfraction diverge de l'indice de réfraction des autres zones.

3. Fibre optique selon la revendication 1 ou la revendication 2, **caractérisée en ce que** le diamètre des canaux (1) n'est pas supérieur au vingtuple, de préférence n'est pas supérieur au décuple de la longueur d'onde du rayonnement guidé dans le guide d'ondes optiques.

4. Fibre optique selon l'une quelconque des revendications 1 à 3, **caractérisée en ce que** le rapport du diamètre de canal à l'écart des axes médians de deux canaux (1) est inférieur à 0,5, l'écart des axes médians de deux canaux (1) étant supérieur au vingtuple de la longueur d'onde du rayonnement guidé dans le guide d'ondes optiques.

5. Fibre optique selon l'une quelconque des revendications 1 à 3, **caractérisée en ce que** le rapport du diamètre de canal à l'écart des axes médians de deux canaux (1) est inférieur à 0,35, l'écart des axes médians de deux canaux (1) étant supérieur au vingtuple de la longueur d'onde du rayonnement guidé dans le guide d'ondes optiques.

6. Fibre optique selon l'une quelconque des revendications 1 à 5, **caractérisée en ce que**, vus dans la section transversale de la fibre, les canaux (1) sont placés de manière hexagonale.

7. Fibre optique selon l'une quelconque des revendications 1 à 6, **caractérisée en ce qu'**au moins dans des zones partielles, la matière de la fibre est dopée d'ions des terres rares.
